# EUROPÄISCHE PATENTANMELDUNG

(11) **EP 1 180 451 A1**
(43) Veröffentlichungstag der Anmeldung: **20.02.2002**
(21) Anmeldenummer: 00117118.0
(22) Anmeldetag: 10.08.2000
(51) Int. Cl.: B60Q 1/30

(54) **Warntafel**

(71) Anmelder: Pinter, Bernd, 51491 Overath (DE); Pinter, Ulrich, 51491 Overath (DE)
(72) Erfinder: Pinter, Bernd, 51491 Overath (DE); Pinter, Ulrich, 51491 Overath (DE)
(74) Vertreter: Sternagel, Fleischer, Godemeyer & Partner Patentanwälte

(57) **Zusammenfassung**

Bei einer Warntafel, insbesondere Parkwarntafel (1, 3, 12, 29), mit einer Reflektionsfläche mit retroreflektierender Oberfläche (8) und Befestigungseinrichtungen (6, 22) zum Befestigen an einem Fahrzeug (2) oder ähnlichem, weist die retroreflektierende Oberfläche (8) bei rot reflektiertem Licht bei einem Beobachtungswinkel von 1/3° einen Reflektionswert von zumindest 12,5 mcd/(lx*cm²) bei einem Anleuchtungswinkel (β) von ±5° und von zumindest 5,0 mcd/(lx*cm²) bei einem Anleuchtungswinkel (β) von ±30° und/oder bei einem Beobachtungswinkel von 1,5° einen Reflektionswert von zumindest 0,325 mcd/(lx*cm²) bei einem Anleuchtungswinkel (β) von ±5° und von zumindest 0,125 mcd/(lx*cm²) bei einem Anleuchtungswinkel (β) von ±30° und/oder bei weiß reflektiertem Licht bei einem Beobachtungswinkel von 1/3° einen Reflektionswert von zumindest 50 mcd/(lx*cm²) bei einem Anleuchtungswinkel (β) von ±5° und von zumindest 20,0 mcd/(lx*cm²) bei einem Anleuchtungswinkel (β) von ±30° und/oder bei einem Beobachtungswinkel von 1,5° einen Reflektionswert von zumindest 1,3 mcd/(lx*cm²) bei einem Anleuchtungswinkel (β) von ±5° und von zumindest 0,5 mcd/(lx*cm²) bei einem Anleuchtungswinkel (β) von ±30° auf.

## Beschreibung

Die Erfindung betrifft eine Warntafel, insbesondere Parkwarntafel mit einer Reflektionsfläche mit retro-reflektierender Oberfläche und Befestigungseinrichtungen zum Befestigen an einem Fahrzeug oder ähnlichem.

Derartige Warntafeln werden bei der Verwendung als Parkwarntafel gemäß Straßenverkehrsordnung zur Kennzeichnung von Fahrzeugen und Anhängern, die innerhalb geschlossener Ortschaften auf der Fahrbahn halten, verwendet. Gemäß §51 c StVZO soll an parkenden Fahrzeugen je eine Parkwarntafel auf der Vorderseite und eine auf der Rückseite des Fahrzeugs angebracht werden, die jeweils mit 100 mm breiten, unter einem Winkel von 45° nach außen und unten verlaufenden roten und weißen Streifen versehen sind. Die Parkwarntafeln müssen auf der dem Verkehr zugewandten Seite des Fahrzeugs möglichst niedrig und nicht höher als 1000 mm angebracht werden. Warntafeln zum Anbringen an einem Fahrzeug sind in dieser Form bekannt, wobei bei der Verwendung als Nachtparkwarntafel besondere Anforderungen an die Reflektionsfähigkeit von deren Oberflächen gestellt werden. Dies ist bei einfachen Warntafeln, die insbesondere zum Kennzeichen von vorstehenden Kanten eines Fahrzeugs verwendet werden, nicht erforderlich. Die Warntafeln werden als starre Tafeln oder als klappbare Tafeln hergestellt, die lediglich im Bedarfsfall aufgeklappt werden und ansonsten nicht als solche erkennbar am Fahrzeug befestigt sind. Die besonders hohen Anforderungen an die Reflektionsfähigkeit von Nachtparkwarntafeln werden derzeit nur von Parkwarntafeln in der Größe von 423 x 423 mm erfüllt, die aus Aluminium bestehen und auf ihrer Vorderseite mit einer rot-weiß gestreiften Reflexfolie eines Typs 2 versehen sind. Eine diese Anforderungen ebenfalls erfüllende kleine Nachtparkwarntafel weist eine Größe von 285 x 285 mm auf. Diese ist klappbar und mit acht Rückstrahlern versehen, die aus Kunststoff bestehen, auf ihrer Oberseite glatt und auf ihrer Unterseite mit prismatischen Flächen versehen sind. Die einzelnen Rückstrahler sind über eine Nietverbindung auf einer Grundplatte aus Aluminium oder Edelstahl aufgebracht. Zum Verschließen bei Nichtgebrauch ist außerdem ein Drehverschluß, ebenso wie bei den großformatigen Parkwarntafeln, vorgesehen, der mit einer Öse oder einer Öffnung an der gegenüberliegenden Seite der Parkwarntafel zusammenwirkt.

Der vorliegenden Erfindung liegt nun die Aufgabe zugrunde, eine Warntafel, insbesondere eine Parkwarntafel, vorzusehen, die noch bessere Rückstrahlwerte aufweist, als die bekannten und insbesondere auch kleinformatig, also insbesondere mit Abmessungen von 285 x 285 mm, herstellbar ist. Gerade bei kleinformatigen Warntafeln können nämlich mit den bekannten Mitteln nur sehr viel schlechtere Rückstrahlwerte erzielt werden als mit den großformatigen Warntafeln, da die Reflektionsfläche sehr viel kleiner ist als bei den großformatigen Warntafeln.

Diese Aufgabe wird durch eine Warntafel nach dem Oberbegriff des Anspruchs 1 dadurch gelöst, dass die retroreflektierende Oberfläche bei rot reflektierendem Licht bei einem Beobachtungswinkel von 1/3° einen Reflektionswert von mindestens 12,5 mcd/(lx*cm²) bei einem Anleuchtungswinkel von ± 5°und von zumindest 5 mcd/(lx*cm²) bei einem Anleuchtungswinkel von ± 30° und/oder bei einem Beobachtungswinkel von 1,5° einen Reflektionswert von zumindest 0,325 mcd/(lx*cm²) bei einem Anleuchtungswinkel von ±5° und zumindest 0,125 mcd/(lx*cm²) bei einem Anleuchtungswinkel von ±30° und/oder bei weiß reflektierendem Licht bei einem Beobachtungswinkel von 1/3° einen Reflektionswert von zumindest 50 mcd/(lx*cm²) bei einem Anleuchtungswinkel von ±5° und von zumindest 20,0 mcd/(lx*cm²) bei einem Anleuchtungswinkel von ±30° und/oder bei einem Beobachtungswinkel von 1,5° einen Reflektionswert von zumindest 3 mcd/(lx*cm²) bei einem Anleuchtungswinkel von ±5° und von zumindest 0,5mcd/(lx*cm²) bei einem Anleuchtungswinkel von ±30° aufweist. Weiterbildungen der Erfindung sind in den abhängigen Ansprüchen definiert.

Dadurch wird eine Warntafel, insbesondere Parkwarntafel, geschaffen, die Reflektionswerte weit oberhalb der amtlich vorgegebenen Sollwerte aufweist, die in den technischen Anforderungen an Fahrzeugteile bei der Bauartprüfung nach § 22a StVZO, TA Nr. 18b gefordert werden. Die Erkennbarkeit der Warntafeln bei Dunkelheit und schlechter Sicht wird dadurch erheblich verbessert, wodurch Unfälle durch Auffahren auf parkende Fahrzeuge sehr viel besser als mit den Warntafeln des Standes der Technik vermieden werden können. Aufgrund der besonders günstigen Werte ist vorteilhaft auch die Verwendung bei kleinen Warntafeln möglich, wodurch die bekannten kleinen Warntafeln mit acht Rückstrahlern ersetzt werden können. In vielen Fällen ist die Verwendung einer kleinen Warntafel an einem parkenden Fahrzeug gerade noch möglich, wohingegen die Verwendung einer großen Warntafel zu Platzproblemen führt. Hier erweist es sich als besonders vorteilhaft, dass die Warntafel nun auch in der kleinformatigen Ausführung sehr gute Reflektionswerte zeigt. Auch in der großformatigen Ausführung erweist sich die Warntafel als gegenüber den bekannten Warntafeln des Standes der Technik vorteilhaft, da auch hierbei sehr viel höhere Reflektionswerte erzielt werden, also die Wahmehmbarkeit der Warntafel durch ein herannahendes Fahrzeug, das diese beleuchtet, bei weitem verbessert wird. Ein weiterer Vorteil liegt auch in der Verwendung einer aufgeklebten Reflexionsfolie statt den bisher bei kleinen Parkwarntafeln üblichen aufgenieteten Kunststoffreflektoren.

Wenn Fahrzeuge, die mit der mit Kunststoffreflektoren bestückten kleinen Parkwarntafel ausgerüstet sind, mit dieser irgendwo anstoßen zersplittern die Kunststoffreflektoren sehr leicht, und die Parkwarntafel wird ungültig. Eine derartige Zersplitterung kann bei der mit der Reflektorenfolie versehenen kleinen Parkwarntafel nicht erfolgen.

Gerade bei Vorsehen einer kleinformatigen Warntafel, insbesondere im Format 285 x 285 mm, weist die retroreflektierende Oberfläche bei rot reflektiertem Licht bei einem Beobachtungswinkel von 1/3° vorzugsweise Reflektionswerte von 13 mcd/(lx*cm²) bis 18 mcd/(lx*cm²) bei einem Anleuchtungswinkel von ±5° und/oder von 6,25 mcd/(lx*cm²) bis 9 mcd/(lx*cm²) bei einem Anleuchtungswinkel von ±30° auf. Bevorzugt weist die retroreflektierende Oberfläche bei rot reflektiertem Licht bei einem Beobachtungswinkel von 1,5° Reflektionswerte von 0,35 mcd/(lx*cm²) bis 0,5 mcd/(lx*cm²) bei einem Anleuchtungswinkel von ±5° und von 0,15 mcd/(lx*cm²) bis 0,25 mcd/(lx*cm²) bei einem Anleuchtungswinkel von ±30° auf. Vorzugsweise wird die rote Färbung des reflektierten Lichts durch die streifenweise Rotfärbung einer ansonsten weißen retroreflektierenden Oberfläche erzeugt. Diese Rotfärbung wird besonders bevorzugt im Siebdruckverfahren auf die weiß retroreflektierende Oberfläche aufgebracht. Die in den technischen Anforderungen geforderten Sollwerte werden trotz dieses Farbauftrags bei weitem überschritten, so dass eine frühzeitige und intensive Warnung erreicht wird. Gerade bei Vorsehen eines roten Anstrichs auf einer retroreflektierenden Oberfläche ist es nicht naheliegend, dass dennoch die Sollwerte der technischen Anforderungen bei weitem überschritten werden und sogar so gute Ergebnisse erzielt werden, dass auch kleinformatige Warntafeln mit diesen sehr guten Reflektionswerten vorgesehen werden können.

Vorzugsweise weist die retroreflektierende Oberfläche bei weiß reflektiertem Licht bei einem Beobachtungswinkel von 1/3° Reflektionswerte von 50 mcd/(lx*cm²) bis 60 mcd/(lx*cm²) bei einem Anleuchtungswinkel von ±5° und von 26,5 mcd/(lx*cm²) bis 31 mcd/(lx*cm²) bei einem Anleuchtungswinkel von ±30° auf. Besonders bevorzugt weist die retroreflektierende Oberfläche bei weiß reflektiertem Licht bei einem Beobachtungswinkel von 1,5° Reflektionswerte von 1,5 mcd/(lx*cm²) bis 2 mcd/(lx*cm²) bei einem Anleuchtungswinkel von ±5° und von 0,6 mcd/(lx*cm²) bis 1 mcd/(lx*cm²) bei einem Anleuchtungswinkel von ±30° auf. Bei Vorsehen von Reflektionswerten in diesen Bereichen sind die weißen Streifen der Warntafeln sogar bei besonders schlechten Witterungs- und Sichtverhältnissen sehr gut erkennbar. Auch die Wahrnehmbarkeit in Kombination mit den roten Streifen kann dadurch besonders gut sichergestellt werden. Da die mit Kunststoffreflektoren versehenen kleinen Parkwarntafeln aus mehreren aufgenieteten Kunststoffreflektoren bestehen kann sich hier in den Nietlöchern und Nahtstellen zwischen den Reflektoren bei Schneefall sehr leicht Schnee ablagern, der die Reflektionskraft beeinträchtigen kann. Hier bietet die erfindungsgemäße Parkwarntafel mit ihrer glatten Folienoberfläche und der sehr hohen Reflexionswerte eine bessere Erkennbarkeit. Auch bereits kleinere Lichtmengen reichen aus, um die Warn- und Signalfunktion der Warntafel wirksam werden zu lassen.

Vorzugsweise ist die retroreflektierende Oberfläche als Folienmaterial, insbesondere selbstklebendes Folienmaterial, gebildet. Besonders bevorzugt kann dadurch ein Grundelement der Warntafel aus einem stabilen dünnen Material, insbesondere einem Metallblech, einer Kombination aus Kunststoff und Metall oder einem anderen Material bestehen. Vorzugsweise kann es aus Aluminium, Edelstahl, Stahl oder einer Kombination aus diesen Materialien, insbesondere in Sandwich-bauweise, hergestellt sein. Das mit der retroreflektierenden Oberfläche versehene Folienmaterial wird anschließend auf die Oberfläche des Grundelementes aufgefügt, insbesondere darauf aufgeklebt. Dadurch ist die Warntafel kostengünstig herstellbar und zugleich auch auf einfache Art und Weise und dennoch hoch wirksam. Das Folienmaterial selbst kann außerdem sehr dünn sein, wodurch auch eine vergleichsweise leichtgewichtige Wamtafel herstellbar ist. Diese kann jedoch zusätzlich auf ihrer Rückseite mit Verstärkungsrippen versehen sein, insbesondere dann, wenn das Grundelement aus einem Kunststoff besteht und als starre Wamtafel ausgeführt ist. Hier eignen sich insbesondere Polypropylen, aber auch andere Kunststoffe. Bei Vorsehen einer Klappbarkeit der Wamtafel kann diese durch Vorsehen eines Scharniers, insbesondere eines Folienscharniers oder Metallscharniers erzeugt werden. An einem Randbereich eines ersten Teils der Wamtafel ist dann vorzugsweise ein Hakenelement zum Befestigen eines zweiten Teils beim Zusammenklappen der Warntafel vorgesehen. Besonders bevorzugt besteht das Hakenelement aus einem flexiblen Material und/oder ist lageveränderlich an dem einen Teil der Wamtafel befestigbar und/oder befestigt. Das Hakenelement dient dem Sichern der beiden Teile der Warntafel aufeinander in dem Zeitraum, in dem die Warntafel nicht als Warnhinweis am Fahrzeug oder einem anderen Gegenstand verwendet werden soll. Alternativ müßte die Wamtafel abgenommen werden. Um die Warntafel nicht ständig von dem Fahrzeug abnehmen und wieder an dieses anbringen zu müssen, kann sie vorteilhaft zusammengeklappt werden. Bislang sind zum Verschließen Drehverschlüsse verwendet worden, die sich jedoch gerade bei feuchter und kalter Witterung verhältnismäßig schwer drehen lassen und somit nicht sehr benutzerfreundlich sind. Durch Vorsehen eines Hakenelementes, insbesondere im oberen Bereich des Randes des einen Teils der Warntafel braucht dieses Hakenelement lediglich nach außen gebogen zu werden, woraufhin sich der zweite Teil der Warntafel automatisch von dem anderen Teil abklappt. Beim Zusammenklappen der Warntafel wird dieser zweite Teil lediglich gegen die Federkraft des Hakenelementes auf das erste Teil der Warntafel aufgefügt und hält nach dem Zurückfedern des Hakenelementes an diesem fest. Durch Vorsehen des flexiblen Hakenelementes wird somit eine nicht nur andere, sondern auch vorteilhafte und zugleich leichter herzustellende Verschlussmöglichkeit der zusammengeklappten Warntafel geschaffen, da das Hakenelement insbesondere an dem Grundelement der Warntafel angeformt sein kann.

Vorzugsweise ist neben dem Hakenelement eine Befestigungs- oder Sicherungseinrichtung zum Befestigen oder Sichern der Wamtafel an einem Objekt, insbesondere einem Fahrzeug, vorgesehen. Die Befestigungs- oder Sicherungseinrichtung ist besonders bevorzugt mit einem an dem Objekt befestigbaren Gegenstück zusammenwirkend und insbesondere stiftförmig und in diesem klemmbar, insbesondere durch Vorsehen eines Längsschlitzes. Die vorzugsweise stiftförmige, mit einem Längsschlitz versehene Befestigungs- oder Sicherungseinrichtung wirkt vorzugsweise mit dem Gegenstück zusammen, das an dem Objekt bzw. Fahrzeug befestigt wird, so dass die Befestigungs- und Sicherungseinrichtung in das Gegenstück eingreift und sich darin festhält. Der Längsschlitz dient dabei dem besseren Einfügen in das Gegenstück, das selbst vorzugsweise hülsenförmig ist. Nach dem Einfügen in das Gegenstück können sich die Teile der stiftförmigen Befestigungs- und Sicherungseinrichtung nach Art eines Spreizdübels auseinanderspreizen und dadurch die Einrichtung in dem Gegenstück festklemmen. Besonders bevorzugt besteht das Gegenstück aus einem Weichpolyethylen, wohingegen die Befestigungs- und Sicherungseinrichtung aus Polypropylen bestehen kann.

Besonders bevorzugt ist auf der Rückseite der Warntafel zumindest eine Abstandshalteeinrichtung, insbesondere in einem von der Befestigungs- und Sicherungseinrichtung weg weisenden Bereich, zum Einhalten eines Abstandes zu dem Objekt vorgesehen. Die Abstandshalteeinrichtung kann flächig auf der Rückseite der Warntafel vorgesehen sein, insbesondere in Form von kleineren Plättchen. Vorzugsweise besteht die Abstandshalteeinrichtung aus einem aufgerauhten oder rauhen Material, um ein Verschieben der Warntafel auf der Oberfläche des Objekts, an der sie angebracht ist, möglichst zu verhindern. Außerdem kann sie vorzugsweise aus einem vergleichsweise weichen Material bestehen, um die Oberfläche des Objekts, an dem die Warntafel befestigt ist, möglichst nicht zu beschädigen. Sofern die Rückseite der Warntafel mit Verstärkungsrippen versehen ist, können ein oder mehrere Abstandshalteeinrichtungen insbesondere zwischen zwei oder mehr Verstärkungsrippen eingefügt sein oder werden.

Zur näheren Erläuterung der Erfindung werden im folgenden mehrere Ausführungsbeispiele anhand der Zeichnungen näher beschrieben. Diese zeigen in:
- Fig. 1: eine Rückansicht eines LKW, der an der linken unteren rückwärtigen Ecke mit einer Wamtafel markiert ist,
- Fig. 2: eine erfindungsgemäß ausgeführte kleinformatige Parkwarntafel in der Draufsicht,
- Fig. 3: eine Draufsicht auf eine andere Ausführungsform einer erfindungsgemäßen Warntafel,
- Fig. 4: eine Querschnittsansicht der Warntafel gemäß Fig. 3,
- Fig. 5: eine Detailansicht des Scharniers gemäß Fig. 4,
- Fig. 6: eine Detailansicht der Befestigungs- und Sicherungseinrichtung der Warntafel gemäß Fig. 4,
- Fig. 7: eine Detailansicht des Hakenelementes der Warntafel gemäß Fig. 4,
- Fig. 8: eine Rückseitenansicht von unten einer weiteren Ausführungsform einer erfindungsgemäßen Wamtafel, und
- Fig. 9: eine Tabelle mit Reflektionswerten für zwei erfindungsgemäße Warntafeln.

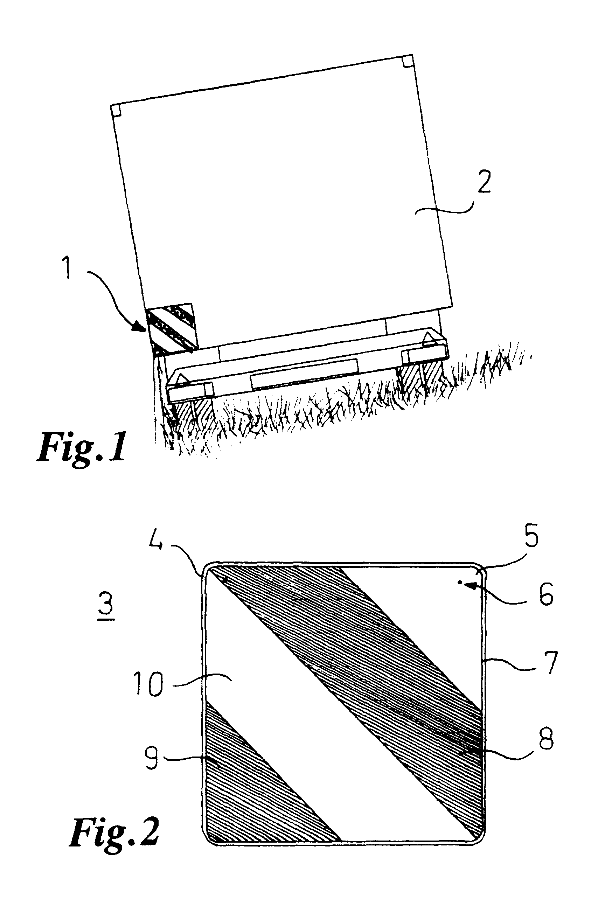

Fig. 1 zeigt eine Ansicht von hinten eines mit einer Warntafel 1 versehenen Lastkraftwagens 2. Dieser ist an einer Böschung abgestellt und daher mit der Warntafel 1 an seinem linken hinteren Ende in der vorgeschriebenen Höhe versehen. Die dargestellte Warntafel 1 ist eine großformatige Warntafel mit Abmessungen von 423 x 423 mm, was bereits aus der Anzahl der schräg unter einem Winkel von 45° verlaufenden 100 mm breiten roten und weißen Streifen ersichtlich ist.

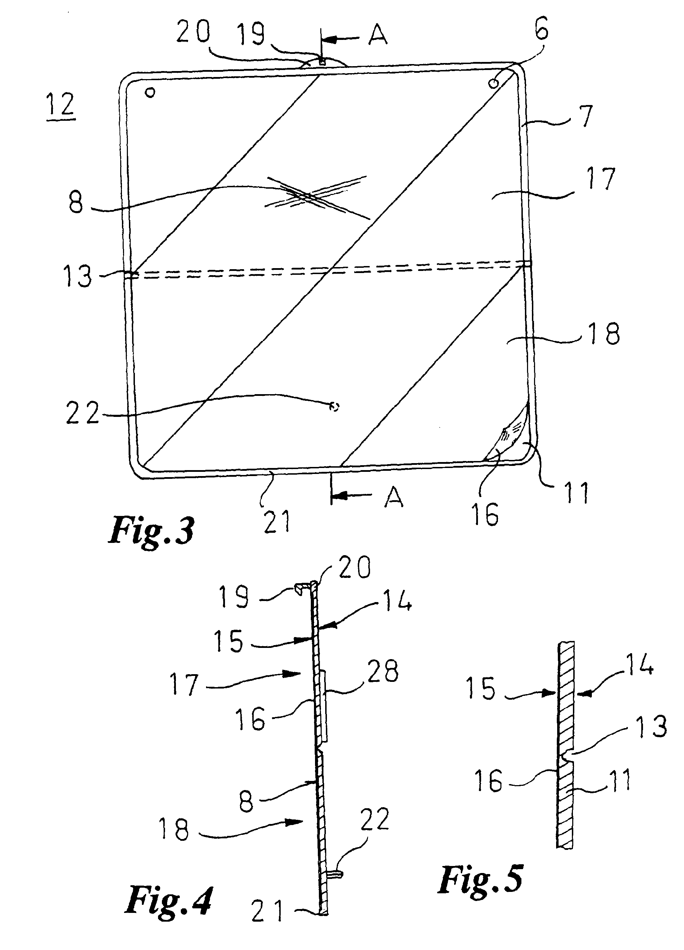

Eine entsprechende kleinformatige Warntafel 3 ist in der Draufsicht in Fig. 2 dargestellt. Sowohl die großformatige Warntafel 1 als auch die kleinformatige Warntafel 3 sind als starre Warntafeln hergestellt. Sie werden somit lediglich in dem Moment, in dem der Lastkraftwagen 2 oder ein anderes Fahrzeug an einem Straßenrand abgestellt werden, zur Kenntlichmachung des Fahrzeugs an diesem angebracht. Zu diesem Zweck weist die kleinformatige Warntafel 3 in zwei benachbarten Ecken 4, 5 jeweils eine Bohrung 6 auf. Der Lochabstand der Bohrung als auch deren Anordnung auf der Wamtafel kann verändert werden. Die Warntafel weist außerdem einen umlaufenden Rand 7 auf, der eine innere Fläche umgrenzt, die mit einer retroreflektierenden Oberfläche 8 mit roten Streifen 9 und weißen Streifen 10 versehen ist. Diese kann beispielsweise in Form einer Folie gebildet sein, wie dies in der Darstellung in Fig. 3 angedeutet ist. In der Ausführungsform gemäß Fig. 1 weist die Warntafel keinen umlaufenden Rand auf, sondern die retroreflektierende Oberfläche erstreckt sich bis zu den äußeren Kanten der Warntafel hin. Auch hier kann die retroreflektierende Oberfläche durch Auffügen einer Folie auf ein Grundelement 11, wie es in Fig. 3 zu sehen ist, erzeugt werden.

Die Warntafel 12 gemäß Fig. 3 ist eine kleinformatige Warntafel, die jedoch mit einer Einrichtung zur Klappbarkeit, nämlich einem Kunststoff-Scharnierelement 13 versehen ist. Das Scharnierelement kann besser Fig. 5 entnommen werden, in der ein Querschnitt durch dieses Detail dargestellt ist. Das Scharnierelement ist hier als Folienscharnier gebildet, wobei an dieser Stelle eine Materialschwächung des Grundelements 11 vorgesehen ist. Die Materialschwächung ist auf der Rückseite 14 der Warntafel vorgesehen, um die Vorderseite 15 als ebene Fläche bilden zu können. Auf der Vorderseite 15 der starren Parkwarntafel wird ein Folienelement 16 und bei der klappbaren zwei halbe Folienelemente 16 aufgeführt, wobei im Bereich des Kunststoffscharniers 13 ein ca. 1 - 2 mm Abstand zwischen den beiden Folienelementen mit der reflektierenden Oberfläche 8 vorgesehen ist. Auch in dieser Ausführungsform ist ein umlaufender Rand 7 des Grundelements 11 erzeugt, in dessen Umgrenzung zwei Folienelemente 16 bei starren Tafeln oder zwei halbe Folienelemente 16 bei der klappbaren Tafel eingelegt sind. Das Folienelement 16 selbst ist vorzugsweise zunächst weiß und wird anschließend mit roter Farbe, beispielsweise im Siebdruckverfahren, streifenweise versehen. Die Farbserie der roten Farbe ist beispielsweise 800 I bei der Fa. 3M Deutschland GmbH. Als Folienelement eignet sich insbesondere eine Folie unter der Typenbezeichnung Scotchlite Diamond Grade 983-10 von der Firma 3M Deutschland GmbH, Neuss. Dies ist ein Folienelement des sogenannten Typs 3, das ausgezeichnete Reflektionswerte aufweist. In Fig. 3 sind die Streifen lediglich angedeutet, jedoch noch nicht farbig unterlegt, wie dies in Fig. 2 bereits geschehen ist.

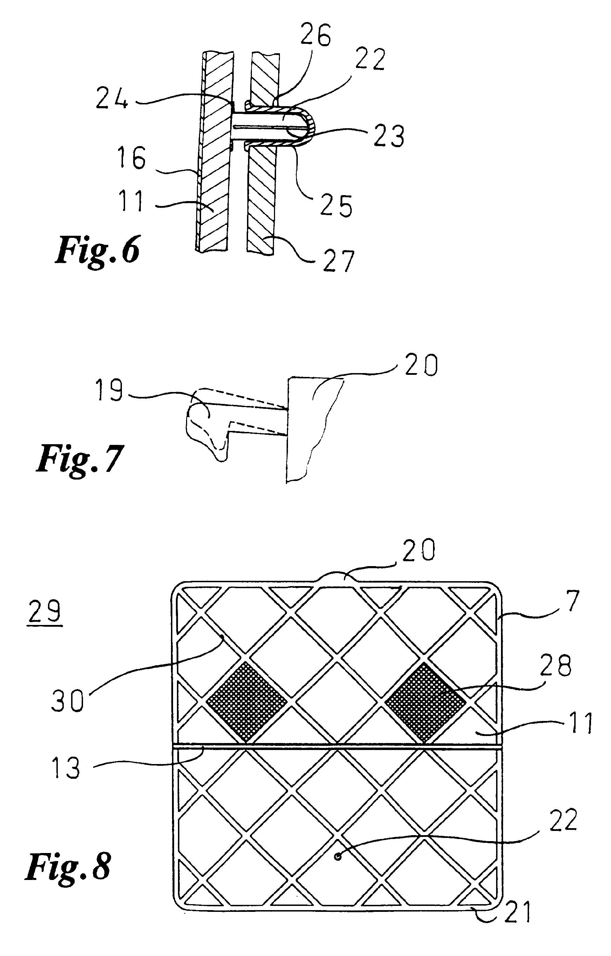

Um beide Teile 17, 18 der Warntafel 12 aufeinander zu sichern und aneinander zu befestigen, so lange die Warntafel nicht für den bestimmungsgemäßen Zweck verwendet wird, ist an dem ersten Teil 17 an dessen oberen Ende ein Hakenelement 19 vorgesehen. Das Hakenelement 19 ist an einem auskragenden Bereich 20 des Grundelements 11 bzw. von dessen umlaufendem Rand 7 angeordnet. Das Hakenelement besteht vorzugsweise aus einem flexiblen Material und/oder ist lageveränderlich an dem ersten Teil 17 befestigt. Bei einer lageveränderlichen Befestigung ist das Hakenelement vorzugsweise drehbar oder schwenkbar befestigt, so dass ebenso wie bei der Ausführung als flexibles Element der gegenüberliegende Rand 21 des zweiten Teils 18 unter dem Hakenelement eingefügt und nachfolgend von diesem festgeklemmt werden kann. Eine solche Beweglichkeit des Hakenelementes ist in Fig. 7 skizziert.

Zur Befestigung der klappbaren Warntafel 12 aus Kunststoff an einem Fahrzeug ist eine Befestigungs- und Sicherungseinrichtung 22 an dem zweiten Teil 18 auf der Rückseite vorgesehen. Das Befestigungs- und Sicherungselement ist stiftförmig und mit einem Längsschlitz versehen. Dies kann sowohl der Schnittansicht entlang der Linie A-A durch die Warntafel gemäß Fig. 3 in Fig. 4 als auch der Detailansicht gemäß Fig. 6 entnommen werden. Das Befestigungs- und Sicherungselement 22 ist insbesondere auf der Rückseite des zweiten Teils 18 aufgeklebt und weist hierzu auskragende Elemente 24 auf. Das Befestigungs- und Sicherungselement 22 ist spreizdübelartig durch Vorsehen des Längsschlitzes 23 angebracht. Das Befestigungs- und Sicherungselement 22 weist somit die Fähigkeit auf, sich nach Einfügen in eine entsprechend geformte Hülse auseinander zu spreizen und dadurch sich in dieser Hülse festzuhalten. Eine solche Hülse 25 ist in Fig. 6 ebenfalls dargestellt. Sie ist in einer Öffnung 26 in beispielsweise einem Fahrzeugheckteil 27 eingefügt. Die Hülse kann insbesondere aus einem Weichpolyethylen bestehen, wobei das Befestigungs- und Sicherungselement 22 insbesondere aus Polypropylen besteht. Ebenso kann das gesamte Grundelement 11 aus Polypropylen oder einem anderen Kunststoff bestehen, jedoch auch aus einem Metall oder aus einer Kombination aus einem Kunststoff und einem Metall, insbesondere in Sandwich-Bauweise. Als Metalle eignen sich hier insbesondere Aluminium, Edelstahl, Stahl oder andere, vorzugsweise nicht rostende und/oder mit einer Beschichtung zum Verhindern von Korrosion versehene Metalle.

Eine weitere Befestigung der Wamtafel an einem Fahrzeug kann über ein Verschrauben erfolgen, insbesondere durch die Bohrungen 6. In die Bohrungen können insbesondere außerdem Pufferstücke eingesetzt werden, die einen vorbestimmten Abstand zur Oberfläche des Fahrzeugs einhalten. Es können alternativ auch lediglich solche Pufferelemente auf der Rückseite des ersten Teils angebracht werden, die insbesondere noch mit einer Öffnung versehen sind, in die eine Schraube eingreifen kann zum Befestigen der Warntafel an dem Fahrzeug. Solche Puffer können beispielsweise auf die Rückseite der Wamtafel aufgeklebt werden. Auch ein Ankleben der Warntafel an dem Fahrzeug ist grundsätzlich möglich, wobei dies beispielsweise auch über die weiteren Pufferflächen 28 geschehen kann. Eine solche Pufferfläche ist in Fig. 4 auf der Rückseite des ersten Teils angeordnet. Sie sorgt als Abstandhalteeinrichtung dafür, dass ein bestimmter Abstand zwischen Wandtafel und Fahrzeugoberfläche eingehalten wird und dadurch keine Beschädigung des Fahrzeugs durch die Warntafel bei Wind auftritt.

Derartige Pufferflächen sind auch bei der Ausführungsform der Warntafel 29 gemäß Fig. 8 vorgesehen. Auch die Warntafel 29 ist klappbar und weist das Befestigungs- und Sicherungselement 22 auf seiner Rückseite auf. Anstelle des Vorsehens einer glatten Rückseite ist diese Warntafel jedoch mit Versteifungsrippen 30 versehen. Die Versteifungsrippen sind kreuzförmig angeordnet und bilden dadurch ein Raster, in das zwei Pufferflächen 28 eingefügt sind. Die sonstige Ausbildung mit auskragendem Bereich 20 ist ebenso ausgeführt wie bei der Ausführungsform der Warntafel gemäß Fig. 3. Durch Vorsehen von Versteifungsrippen 30 wird die Wamtafel in sich versteift und kann dadurch auch aus einem weicheren Material hergestellt werden, insbesondere aus einem Kunststoff. Besonders eignet sich hier auch Polypropylen. Die Vorderseite der Wamtafel ist vorzugsweise eben und glatt ausgeführt, um eine retroreflektierende Oberfläche bilden zu können, insbesondere unter Verwendung von einem oder zwei Folienelementen, wie dies ebenfalls zu Fig. 3 bereits beschrieben ist.

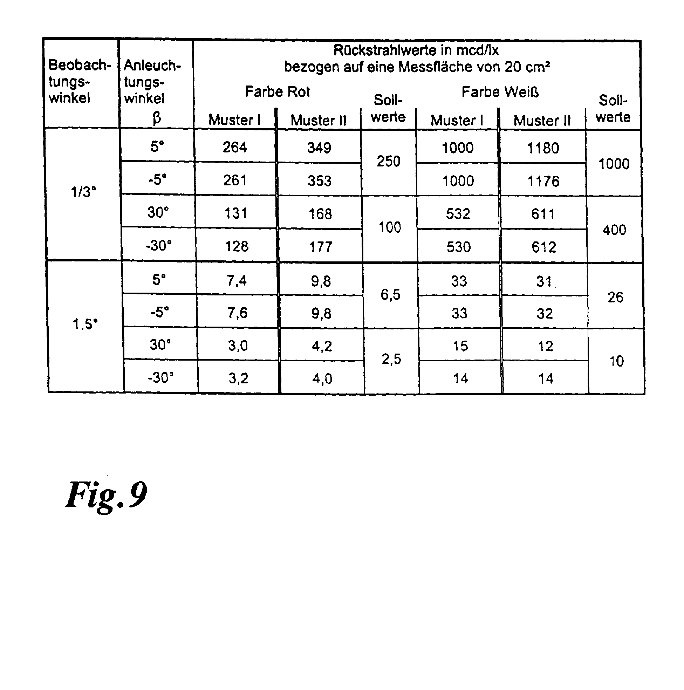

In Fig. 9 ist eine Tabelle gezeigt, in der für zwei Warntafelmuster die jeweils gemessenen Reflektionswerte für die roten und weißen Streifen unter verschiedenen Beobachtungswinkeln und Anleuchtungswinkeln β angegeben sind. Außerdem sind die in den technischen Anforderungen Nr. 18b in § 22a StVZO enthaltenen Sollwerte angegeben, wobei alle Werte jeweils bezogen sind auf eine Meßfläche von 20 cm². Zur Normierung auf mcd/(lx*cm²) sind daher die angegebenen Werte noch durch einen Faktor 20 zu dividieren. Aus dieser Tabelle ergibt sich, dass insbesondere das Muster II die geforderten Sollwerte bei weitem übersteigt, teilweise um mehr als die Hälfte des geforderten Sollwertes. Den Messungen zugrundegelegt wurde eine Warntafel mit dem Format 285 x 285 mm der retroreflektierenden Oberfläche. Diese wurde als Folienmaterial vorgesehen, das unter der Bezeichnung "Scotchlite Diamond Grade 983-10" der Firma 3M Deutschland GmbH, Neuss, erhältlich ist. Das retroreflektierende Folienmaterial ist auf ein Aluminiumblech aufgeklebt und die rot reflektierenden Streifen im Siebdruckverfahren aufgebracht, wobei eine Farbserie 880 I verwendet wurde. Die gewählten Beobachtungswinkel und Anleuchtungswinkel β sind die in den technischen Anforderungen bei der Bauartprüfung nach § 22a StVZO, TA 18b für Parkwarntafeln üblichen Meßwinkel.

Als besonders vorteilhaft ergibt sich, dass sogar kleinformatige Warntafeln, die bislang aufgrund ihres kleineren Formats schlechtere Reflektionswerte oder Rückstrahlwerte aufwiesen, nun ebenfalls sehr gute Rückstrahlwerte aufweisen und dadurch besonders vorteilhaft auch bei kleineren Fahrzeugen verwendet werden können, bei denen das Vorsehen von großformatigen Warntafeln sich oftmals als schwierig erweist, da der erforderliche Platz von zumindest 430 x 430 mm nicht unbedingt vorhanden ist.

Anstelle der in den vorigen Figuren dargestellten und zu diesen beschriebenen Ausführungsformen können auch zahlreiche andere Ausführungsformen einer erfindungsgemäßen Warntafel gebildet werden, die jeweils jedoch eine retroreflektierende Oberfläche mit hervorragenden Reflektionswerten auch für kleinformatige Warntafeln aufweist, insbesondere bei Verwendung eines Folienmaterials mit einer solchen retroreflektierenden Oberfläche.

### Bezugszeichenliste

- 1: großformatige Warntafel
- 2: Lastkraftwagen
- 3: kleinformatige Warntafel
- 4: Ecke
- 5: Ecke
- 6: Bohrung
- 7: umlaufender Rand
- 8: retroreflektierende Oberfläche
- 9: rote Streifen
- 10: weiße Streifen
- 11: Grundelement
- 12: klappbare kleinformatige Warntafel
- 13: Scharnierelement
- 14: Rückseite
- 15: Vorderseite
- 16: Folienelement
- 17: erster Teil
- 18: zweiter Teil
- 19: Hakenelement
- 20: auskragender Bereich
- 21: Rand
- 22: Befestigungs- und Sicherungselement
- 23: Längsschlitz
- 24: auskragendes Element
- 25: Hülse
- 26: Öffnung
- 27: Fahrzeugheckteil
- 28: Pufferfläche
- 29: klappbare Warntafel
- 30: Versteifungsrippen
- β: Anleuchtungswinkel

## Patentansprüche

1. Warntafel, insbesondere Parkwarntafel (1, 3, 12, 29), mit einer Reflektionsfläche mit retroreflektierender Oberfläche (8) und Befestigungseinrichtungen (6, 22) zum Befestigen an einem Fahrzeug (2) oder ähnlichem,
**dadurch gekennzeichnet, dass**
die retroreflektierende Oberfläche (8) bei rot reflektiertem Licht bei einem Beobachtungswinkel von 1/3° einen Reflektionswert von zumindest 12,5 mcd/(lx*cm²) bei einem Anleuchtungswinkel (β) von ±5° und von zumindest 5,0 mcd/(lx*cm²) bei einem Anleuchtungswinkel (β) von ±30° und/oder bei einem Beobachtungswinkel von 1,5° einen Reflektionswert von zumindest 0,325 mcd/(lx*cm²) bei einem Anleuchtungswinkel (β) von ±5° und von zumindest 0,125 mcd/(lx*cm²) bei einem Anleuchtungswinkel (β) von ±30° und/oder bei weiß reflektiertem Licht bei einem Beobachtungswinkel von 1/3° einen Reflektionswert von zumindest 50 mcd/(lx*cm²) bei einem Anleuchtungswinkel (β) von ±5° und von zumindest 20,0 mcd/(lx*cm²) bei einem Anleuchtungswinkel (β) von ±30° und/oder bei einem Beobachtungswinkel von 1,5° einen Reflektionswert von zumindest 1,3 mcd/(lx*cm²) bei einem Anleuchtungswinkel (β) von ±5° und von zumindest 0,5 mcd/(lx*cm²) bei einem Anleuchtungswinkel (β) von ±30° aufweist.

2. Warntafel nach Anspruch 1,
**dadurch gekennzeichnet, dass**
die retroreflektierende Oberfläche (8) bei rot reflektiertem Licht bei einem Beobachtungswinkel von 1/3° Reflektionswerte von 13 mcd/(lx*cm²) bis 18 mcd/(lx*cm²) bei einem Anleuchtungswinkel (β) von ±5° und/oder von 6,25 mcd/(lx*cm²) bis 9 mcd/(lx*cm²) bei einem Anleuchtungswinkel (β) von ±30° aufweist.

3. Warntafel nach Anspruch 1 oder 2,
**dadurch gekennzeichnet, dass**
die retroreflektierende Oberfläche (8) bei rot reflektiertem Licht bei einem Beobachtungswinkel von 1,5° Reflektionswerte von 0,35 mcd/(lx*cm²) bis 0,5 mcd/(lx*cm²) bei einem Anleuchtungswinkel (β) von ±5° und von 0,15 mcd/(lx*cm²) bis 0,25 mcd/(lx*cm²) bei einem Anleuchtungswinkel (β) von ±30° aufweist.

4. Warntafel nach einem der vorstehenden Ansprüche,
**dadurch gekennzeichnet, dass**
die retroreflektierende Oberfläche (8) bei weiß reflektiertem Licht bei einem Beobachtungswinkel von 1/3° Reflektionswerte von 50 mcd/(lx*cm²) bis 60 mcd/(lx*cm²) bei einem Anleuchtungswinkel (β) von ±5° und von 26,5 mcd/(lx*cm²) bis 31 mcd/(lx*cm²) bei einem Anleuchtungswinkel (β) von ±30° aufweist.

5. Wamtafel nach einem der vorstehenden Ansprüche,
**dadurch gekennzeichnet, dass**
die retroreflektierende Oberfläche (8) bei weiß reflektiertem Licht bei einem Beobachtungswinkel von 1,5° Reflektionswerte von 1,5 mcd/(lx*cm²) bis 2 mcd/(lx*cm²) bei einem Anleuchtungswinkel (β) von ±5° und von 0,6 mcd/(lx*cm²) bis 1 mcd/(lx*cm²) bei einem Anleuchtungswinkel (β) von ±30° aufweist.

6. Warntafel nach einem der vorstehenden Ansprüche,
**dadurch gekennzeichnet, dass**
die retroreflektierende Oberfläche (8) als Folienmaterial (16), insbesondere selbstklebendes Folienmaterial, gebildet ist.

7. Warntafel nach einem der vorstehenden Ansprüche,
**dadurch gekennzeichnet, dass**
die Reflektionsfläche geringe Abmessungen, insbesondere Abmessungen von 285 x 285 mm aufweist.

8. Wamtafel nach einem der vorstehenden Ansprüche,
**dadurch gekennzeichnet, dass**
an einem Randbereich (20) eines ersten Teils (17) der Warntafel (12, 29) ein Hakenelement (19) zum Befestigen eines zweiten Teils (18) beim Zusammenklappen der Warntafel (12, 29) vorgesehen ist.

9. Wamtafel nach Anspruch 8,
**dadurch gekennzeichnet, dass**
das Hakenelement (19) aus einem flexiblen Material besteht und/oder lageveränderlich an dem einen Teil (17) der Wamtafel (12, 29) befestigbar und/oder befestigt ist.

10. Warntafel nach einem der vorstehenden Ansprüche,
**dadurch gekennzeichnet, dass**
eine Befestigungs- und/oder Sicherungseinrichtung (22) zum Befestigen oder Sichern der Warntafel (12, 29) an einem Objekt, insbesondere einem Fahrzeug (2), vorgesehen ist.

11. Warntafel nach Anspruch 10,
**dadurch gekennzeichnet, dass**
die Befestigungs- und/oder Sicherungseinrichtung (22) mit einem an dem Objekt befestigbaren Gegenstück (25) zusammenwirkend und insbesondere stiftförmig und in diesem klemmbar ist, insbesondere durch Vorsehen eines Längsschlitzes (23).

12. Warntafel nach Anspruch 10 oder 11,
**dadurch gekennzeichnet, dass**
auf der Rückseite (14) der Warntafel (1, 3, 12, 29) zumindest eine Abstandshalteeinrichtung (28), insbesondere in einem von der Befestigungs-und/oder Sicherungseinrichtung (22) wegweisenden Bereich, zum Einhalten eines Abstandes zu dem Objekt (2, 27) vorgesehen ist.

13. Warntafel nach einem der vorstehenden Ansprüche,
**dadurch gekennzeichnet, dass**
die Wamtafel (1, 3, 12, 29) aus einer einem Kunststoff und/oder Metall und/oder einer Materialkombination besteht, insbesondere aus einer Kombination aus einem Metall und einem Kunststoff, insbesondere in Sandwichaufbau.

14. Wamtafel nach Anspruch 13,
**dadurch gekennzeichnet, dass**
das Metall Aluminium, Stahl, Edelstahl oder ein anderes Metall, insbesondere einer Kombination aus einem der vorstehenden Metalle und der Kunststoff Polypropylen oder ein anderer Kunststoff ist.
